# EUROPEAN PATENT APPLICATION

(11) **EP 3 998 214 A1**
(43) Date of publication of application: **18.05.2022**
(21) Application number: 21159640.8
(22) Date of filing: 26.02.2021
(51) Int. Cl.: B64D 27/24, B64C 11/00, B64C 29/00

(54) **DUCTED FAN ENGINE, ARRAY OF DUCTED FAN ENGINES, AND AIRCRAFT**

(71) Applicant: Lilium eAircraft GmbH, 82234 Wessling (DE)
(72) Inventor: Singh, Deepesh, 82205 Gilching (DE); Ochoa, Xabier, 80687 München (DE); Elsahhar, Weam, 82234 Weßling (DE); Vermeiren, Sébastien, 80997 Munich (DE)
(74) Representative: Schmidt, Steffen

(57) **Abstract**

Ducted fan engine (1) configured for providing thrust for an aircraft (100), in particular an aircraft having vertical takeoff and landing capability, comprising: a shroud (3) having a substantially circular cross section; a stator (5) having one or more substantially radially extending stator vanes (51); and a rotor (7) rotatably supported by the shroud; wherein the rotor comprises at least 19 rotor blades (71), in particular at least 25 rotor blades.

## Description

### Field

The invention relates to a ducted fan engine for providing thrust to propel an aircraft and to an array comprising several ducted fan engines. Furthermore, the invention relates to an aircraft, in particular an aircraft capable of vertical take-off and landing (VTOL), comprising such a ducted fan engine or array.

### Related Art

Aircraft capable of vertical take-off and landing (VTOL) have the potential to incorporate both the advantages of helicopters, namely starting and landing using the limited space and/or in rough terrain, as well as the advantages of conventional aircraft, such as high traveling velocities and cruising efficiently, with one another. Challenges in the design of VTOL aircraft include the necessity that, on the one hand, large propeller areas are required for the provision of a sufficient mass flow to create thrust into the vertical direction for takeoff or landing, and at the same time limit the energy consumption. On the other hand, propellers must be configured for the least amount of aerodynamic resistance for cruising, when the lift is dynamically created by means of suitable wing profiles. The reduction of energy consumption is particularly relevant in the case of electrically powered VTOL aircraft (eVTOL) such as the eVTOL aircraft described in Lilium^{®}'s patent applications US 2016/0023754 A1 or US 2016/03115221 A1.

US 2016/03115221 A1 describes an eVTOL aircraft with multiple electrically powered ducted fan engines, each of which comprise a shroud containing a stator with at least one stator vane or guiding vane and a rotor with several rotor blades.

Known VTOL aircraft using ducted fan engines, such as the Bell X-22 or the Doak VZ-4 have four or eight rotor blades, respectively, and a corresponding number of stator vanes.

Vertical take-off aircraft designed for hovering flight comprise engines that can be rotated about a pivot axis. During take-off, landing, or hovering flight, the engines are placed in a take-off/landing position in which the direction of thrust is oriented vertically. In order to accelerate the aircraft after take-off, the engines may be continuously pivoted in such a way that the direction of thrust is ultimately aligned with a cruise flight direction. The thrust provided by the engine to power the aircraft is transferred towards the fuselage through a mechanical system attaching the engine to the fuselage and allowing the engine to be pivoted in relation to the fuselage.

Passenger aircraft capable of vertical take off and landing are particularly suitable for use as an urban air taxi to provide regional mobility connecting city centers. In order to optimize operational feasibility, especially for a passenger oriented hop-on/hop-off service, it is desireable to maximize the total number of flights that an aircraft can make through a given airport within a given period of time, such as one day. Regulations such as EASA's 21J SC-VTOL (2019) effectively limit the number of permissible flights through a given airport by limiting the integrated noise emission in the given time of operation. Flight regulations additionally define certain safety requirements to be met, such as ingestion capability or resiliency against foreign object damage, for instance with regard to bird strike, hail strike, or the like.

General acceptance of urban air taxis is also expected to be dependent on low noise emission, with regard to both for passengers as well as for the public in the proximity of an urban airport and along travelling routes. Particularly quiet engines and aircraft are therefore desired.

### Description

It is an object of the invention to overcome the disadvantages of the prior art, in particular to provide a quiet and/or energy efficient engine for propelling an aircraft and aircraft, particularly a VTOL, more particularly an eVTOL. This objective is solved by the subject matter of independent claim 1.

Accordingly, a ducted fan engine is configured for providing thrust for an aircraft, in particular an aircraft having vertical takeoff and landing capability, such as an eVTOL aircraft. The ducted fan engine comprises a shroud having a substantially circular cross-section. The shroud may alternatively be called duct. The shroud realizes casing in which a rotor and stator are arranged and through which an airflow may be conveyed for propelling the aircraft. The shroud of the ducted fan engine may include an aerodynamic control structure, such as a control canard, a canard structure, an aileron or landing flap.

In the ducted fan engine, the rotor imparts momentum onto the incoming air flow increasing its pressure, temperature and radial swirling, corresponding to the simultaneously generated thrust. Ducted fan engines have the inherent capability to reduce noise radiated by an aircraft to the environment by shielding noise sources through the shroud of the engine, thereby reducing emission angles.

The ducted fan engine further comprises a stator comprising one or more substantially radially extending stator vanes, and a rotor rotatably supported by the shroud. The stator may include a shaft arranged at a radially inner region of the stator to which shaft the rotor is attached. The ducted fan engine defines a rotary axis around which the rotor rotates. It may be preferred that the shroud, the stator and the rotor share a common coaxial orientation with regard to the rotary axis. It may be preferred that the ducted fan engine comprises no more than one rotor and/or no more than one stator. The arrangement of the stator, preferably behind the rotor with regard to the forward direction of the aircraft, allows to provide one or more stator-vanes for de-swirling angular flow caused by the rotor, and to recover parallel velocity of the air conveyed through the shroud thus helping to gain more thrust and aerodynamic engine efficiency.

According to the invention, the rotor comprises at least 19 rotor blades, in particular at least 25 rotor blades. Several rotor blades may be arranged on the outside of a rotor hub in rotationally symmetrical manner and/or in equal circumferential distances to one another. In particular, the number of rotor blades is larger than the number of stator vanes or guide vanes of the ducted fan engine. For example, the number of stator vanes may be less than half, in particular less than one third, of the number of rotor blades. Surprisingly, it was shown that fan tones are caused by the ducted fan engine are to a large extent caused by the interaction of incoming turbulence with the fan, wherein a higher rotor blade count was shown to be helpful to chop off any incoming turbulence thereby reducing fan tones. Airflow entering the shroud of the ducted fan engine is in many instances not uniform due to, for example, atmospheric wind instabilities. Those instabilities are ingested by the fan and interact with the leading edge of the rotor, for example whenever a rotor blade interacts with an instability or vortex. During the course of one second, an instability or vortex may cause a multitude of such interactions dependent on the RPM and the rotor blade number of the engine, causing rotor tones and/or, in case of non-periodic interactions, broadband noise emitted throughout a multitude of different frequencies. A combination of rotor tones and rotor broadband noise may be referred to as rotor noise. Rotor noise travels mostly upstream. The downstream propagation of rotor noise may be reduced by the at least one stator vane. The selection of an unusually high number of 19, 25 or more, for example 30, 40, or more, rotor blades for a ducted fan engine has surprisingly shown to significantly reduce fan tones, thereby rendering an aircraft using one or more ducted fan engines according to the invention significantly quieter than aircraft using other engines.

According to a further development, the rotor comprises at least 28 rotor blades, in particular at least 30 rotor blades. Alternatively or additionally, the rotor comprises no more than 45 rotor blades or no more than 38 rotor blades, in particular no more than 35 rotor blades. It may be preferred that the ducted fan engines rotor comprises exactly 33 rotor blades. Although increasing the number of rotor blades leads to less sound emission, the ducted fan engine's ingestion capability and/or manufacturing costs were shown to be affected detrimentally for an exceedingly large rotor blade count.

In one embodiment of a ducted fan engine, the rotor includes a hub coaxial with regard to a rotary axis of the ducted fan engine, wherein the rotor blades extend radially outward from the hub. The airfoil of the rotor blades extends approximately parallel to the rotary axis in the proximity of the rotor hub. Alternatively or additionally, the airfoil of the rotor blades extends at an inclination of approximately at least 20° and/or no more than 60° with respect to the rotary axis at an end of the rotor blades distal with regard to the rotor hub. The airfoil of the rotor blades may at their respective distal end have an inclination of approximately at least 35° and/or no more than 45°, in particular approximately 40°, with respect to the rotary axis. In the radial extension of a rotor blade, the inclination of its airfoil may increase continuously towards the outside. Such a rotor blade design was shown to be advantageous with regard to thrust efficiency as well as noise reduction.

In another embodiment of a ducted fan engine, which may be combined with the above-mentioned ones, the rotor blades have a rear edge (or trailing edge) extending essentially straight in the radial direction, in particular perpendicular to the rotary axis, particularly with a slight concave curvature. Additionally or alternatively, the rotor blades have a leading edge (or forward edge) extending in the radial direction having a concave shape. Such rotor blade design was shown to be advantageous with regard to thrust efficiency as well as noise reduction.

According to one embodiment of the ducted fan engine, which may be combined with the aforementioned ones, the stator comprises no more than 12 stator vanes. In particular, the stator comprises no more than ten or eight stator vanes, more particularly no more than six stator vanes. Additionally or alternatively, the stator comprises at least two or three stator vanes. It may be preferred that the stator comprises exactly 4 stator vanes. Defining a minimal number of stator vanes larger than one has been shown to improve aerodynamic efficiency of the engine. Several stator vanes may be arranged on the outside of the stator housing in rotationally symmetrical manner and/or in equal circumferential distances to one another. The at least one stator vane or guide vane serves to realign airstream in the direction of the rotary axis of the ducted fan engine after the airstream was imposed with swirl by the rotor, thereby recovering parallel airflow velocity so as to gain more thrust and aerodynamic engine efficiency. However, the impact of the airstream coming from the rotor onto the at least one stator vane leads to periodic interaction of the rotor wakes with the leading edge of the stator vane downstream of the rotor, causing blade passing frequency tones which are also called interaction tones. Any non-periodic interaction of the stator vanes with remnants of vortices or instabilities having passed the rotor leads to further broadband noise. The interaction tones and interaction broadband noise may be referred to as interaction noise. Such interaction noise is mostly present downstream of the ducted fan engine whereas upstream propagation is reduced by the rotor. By decreasing vane number, the number of instances in which rotor wakes strike the stator vane causing interaction noise was shown to be decreased.

In one embodiment of a ducted fan engine, which may be combined with the aforementioned ones, the at least one stator vane extends radially between an inner surface of the shroud and an outer surface of a stator housing. The stator housing is rigidly attached to the shroud through the at least one stator vane. The airfoil of the at least one stator vane is essentially constant in the radial direction. Alternatively or additionally, the airfoil of the at least one stator vane extends at an inclination of approximately at least - 5° and/or no more than - 30° with respect to the rotary axis. In particular, the inclination of the stator vanes airfoil may be at least - 10° and/or no more than - 20°. It may be preferred that, in case of the rotor blades having an inclination, the stator vanes have an inclination oriented towards the opposite side with regard to the rotary axis, such that swirl imparted onto the airflow by the rotor may be de-swirled by a corresponding, opposite inclination of the stator. Such stator van design was shown to be advantageous with regard to thrust efficiency as well as noise reduction.

According to an embodiment of the ducted fan engine that may be combined with the above-mentioned ones, the ratio of the number of stator vanes to the number of rotor blades is at least 1/20, in particular at least 1/10, and/or no more than 2/7, in particular no more than ½ or no more than 1/5, more particularly no more than 1/6. Most particularly, the ratio may lie between 1/8 and 1/9. A preferred ratio may be 4/33. Such ratios of number of stator vanes with respect to number of rotor blades have been shown to yield particularly desirable results with regard to sound emission and engine efficiency.

In another embodiment of a ducted fan engine, which may be combined with the aforementioned ones, the axial length of the at least one stator vane is larger than the axial length of the rotor blades. The axial length of a rotor blade or stator vane, respectively, shall be determined as the length in the direction of the rotary axis of the ducted fan engine, in particular on the respective radial inner end of the stator vane or rotor blade, that is in the radial proximity of the rotor hub or stator housing. In particular, the at least one stator vane is at least twice as long, in particular at least four times as long, more particularly at least five times as long, as the rotor blades. Additionally or alternatively, the at least one stator vane is no more than 10 times, in particular no more than eight times, more particularly no more than six times, as large as the rotor blades. It has been shown that using a relatively larger stator vane in comparison to the rotor blades helps to improve engine efficiency through de-swirling the airflow while allowing to minimize the number of stator vanes so as to avoid interaction noise.

A ducted fan engine according to a further embodiment, which may be combined with the aforementioned ones, has a shroud with a width, in particular an inner diameter, being no larger than 500 mm, in particular in a range of 200 mm to 400 mm, more particularly in a range of 270 mm to 330 mm. In a preferred embodiment, the inner diameter of a shroud may be 300 mm. The inner diameter of the shroud is larger than the outer diameter of the rotor, allowing the rotor to be housed and rotate within the shroud. In order to optimize the use of the shroud surrounding the rotor, however, it may be preferred that the outer (distal) diameter of the rotor blades is at least 70%, in particular at least 80%, more particularly at least 90% or 95% of the inner diameter of the shroud. Surprisingly, it was shown that ducted fan engines of a small shroud diameter are particularly suitable to maximize both engine efficiency as well as noise reduction.

According to one embodiment of the ducted fan engine, it comprises at least one electromotor configured for driving the rotor. It may be preferred that the electromotor is encased within the stator housing and/or within the rotor hub. The at least one electromotor may have an output shaft directly coupled to the rotor or may be provided with a transmission coupling an output shaft of the electromotor to the rotor. Electromotors can be operated at significantly lower noise emission levels than combustion engines. The arrangement of an electromotor in the proximity of the rotor allows to minimize drag impact of the motor onto the aircraft, thus allowing for increased overall aircraft operation efficiency.

The invention also relates to an array of several ducted fan engines rigidly coupled to one another, in particular in an axis-parallel manner. It may be preferred that two, three or five ducted fan engines are rigidly coupled to one another, in particular with their respective rotary axes parallel to one another. Using arrays of ducted fan engines such as described above allows for a distribution of sound emission sources at the aircraft, thereby reducing noise radiation.

Another aspect of the invention relates to an aircraft, in particular a passenger aircraft, having vertical takeoff and landing capability, in particular an electronically powered vertical takeoff and landing aircraft (eVTOL), including a fuselage and at least one ducted fan engine for array of ducted fan engines as described above. The aircraft may be equipped with at least 10 or at least 20, in particular at least 30, and/or no more than 100 or no more than 50, in particular no more than 40 ducted fan engines. A preferred aircraft may comprise 36 ducted fan engines. The at least one ducted fan engine or at least one array of ducted fan engines is rotatably connected to the fuselage around a pitch axis of the aircraft. The aircraft in particular includes an engine pivotable in relation to the fuselage between a cruising flight position in which the thrust direction of the engine is aligned with the longitudinal axis of the aircraft, and a takeoff and landing position in which the thrust direction of the engine is angled towards the vertical axis of the aircraft. Engines being pivotably attached to the fuselage of the aircraft may be described as a thrust vectoring system. The aircraft can include at least one pivotable ducted fan engine in the rear of the aircraft, in particular in combination with an aileron. Particularly, the aircraft may be provided with several, in particular exactly 2, exactly 3, or exactly 4, trailing pairs of arrays of the ducted fan engines arranged in the rear of the aircraft. Alternatively or additionally, the aircraft can include at least one ducted fan engine in the front of the aircraft, in particular in the manner of, instead of, or in combination with a canard. Particularly, the aircraft may be provided with one or more, in particular exactly 1, or exactly 2, leading pairs of arrays of ducted fan engines arranged in the front of the aircraft. Alternatively or additionally, the aircraft can include at least one ducted fan engine attached to a central section of the aircraft with regard to its lengthwise extension, in particular in combination with a lift body such as a wing, winglet or canard. The aircraft can include a plurality of engines arranged side-by-side in a row transversely to the direction of flow and/or in the direction of the pitch axis. By providing an aircraft with a ducted fan engine such as described above, the overall noise emission of the aircraft can be minimized.

According to a further development, the aircraft has a cruise flight state in which the at least one ducted fan engine is oriented with its rotary axis corresponding to a longitudinal axis of the aircraft at an altitude of approximately 20 m and in which noise emission determined in a lateral distance of 100m lies below 65 dBA, in particular below 62 dBA, more particularly below 60 dBA, most particularly below 55 dBA. Advantageously, the aircraft using one or more ducted fan engines as described above is inaudible from the ground when flying above 400 m.

In one embodiment of an aircraft, which may be combined with the aforementioned one, the aircraft has an approach and/or transition state in which the at least one ducted fan engine is tilted with its rotary axis oriented between the longitudinal axis and the yaw axis of the aircraft at an altitude of approximately 4 m or more and in which noise emission determined in distance of 100m lies below 73 dBA, in particular below 70 dBA, more particularly below 68 dBA, most particularly below 65 dBA or below 60 dBA. Thereby, the aircraft using one or more ducted fan engines as described above is no louder while taking off than a passing truck.

In one embodiment of an aircraft, which may be combined with the aforementioned one, the aircraft has a hovering state in which the at least one ducted fan engine is oriented with its rotary axis corresponding to a yaw axis of the aircraft at an altitude of approximately 4 m in which noise emission determined in distance of 100m lies below 70 dBA, in particular below 68 dBA, more particularly below 65 dBA, most particularly below 63 dBA or below 60 dBA.

The aircraft may include at least one primary lift body, such as a canard structure and/or a wing, which is stationarily attached to the fuselage, wherein the at least one ducted fan engine or array of ducted fan engines is attached to the primary lift body. The primary lift body may have a relatively large surface area extending in the wing span direction and the longitudinal direction of the aircraft. The primary lift body may be a statically loadbearing element for providing a lifting force during cruising flight of the aircraft in the primary cruise flight direction. It may be preferred that the primary lift body is integrally connected to the fuselage of the aircraft. In particular, the at least one ducted fan engine is arranged behind the primary lift body with regard to the cruise flight direction of the aircraft.

In particular, the aircraft is configured to be manned with at least two, preferably at least four, more preferred exactly five passengers, who may include at least one aircraft pilot. The passenger aircraft comprises a cabin for carrying one or more human passengers. In particular, the cabin for the passengers is located in the forward portion of the aircraft. The use of the ducted fan engine described herein allows to reduce or completely omit the necessity for sound absorption components which may usually surround an aircraft passenger cabin without impairing passenger comfort, rendering the aircraft lighter and thus overall more efficient.

### Brief description of the drawings/figures

Preferred configurations of the invention are described in the dependent claims. The accompanying drawings illustrate the embodiments of the present disclosure and, together with the description, further serve to explain the principles of the embodiments and to enable a person skilled in the pertinent art to make and use the embodiments.
- Fig. 1: a perspective view of an aircraft according to the invention comprising a variable lift body arranged in a tilted position;
- Fig. 2: a schematic view of the variable lift body according to Fig. 1;
- Fig. 3: a schematic front view of a ducted fan engine;
- Fig. 4: a schematic perspective view of the rotor and stator of the ducted fan engine according to Fig. 3;
- Fig. 5: a schematic cross sectional side view of a ducted fan engine;
- Fig 6a: an experimental setup for measuring sound emissions in hover flight state; and
- Fig 6b: an experimental setup for measuring sound emissions in cruise flight state.

The exemplary embodiments of the present disclosure will be described with reference to the accompanying drawings. Elements, features and components that are identical, functionally identical and have the same effect are - insofar as is not stated otherwise - respectively provided with the same reference character.

Reference numeral 100 generally designates an aircraft provided with two sets of ducted fan engines 1 arranged into a respective array 10. The aircraft 100 comprises a fuselage 103 with wings 105 attached thereto. Each wing 105 carries a respective array 10 of ducted fan engines 1. It is conceivable that each wing 105 carries two or more respective arrays of ducted fan engines 1 and/or one or more ducted fan engine 1 mounted individually pivotable to the wing 105 and/or fuselage 103. In the illustrated embodiment, the aileron 107 with the engine 1 is rotatably attached to the fuselage 103 via the wing 105. In relation to the fuselage 103, the engine 1 is pivotable around the lateral or pitch axis Y corresponding to the direction of the wing span.

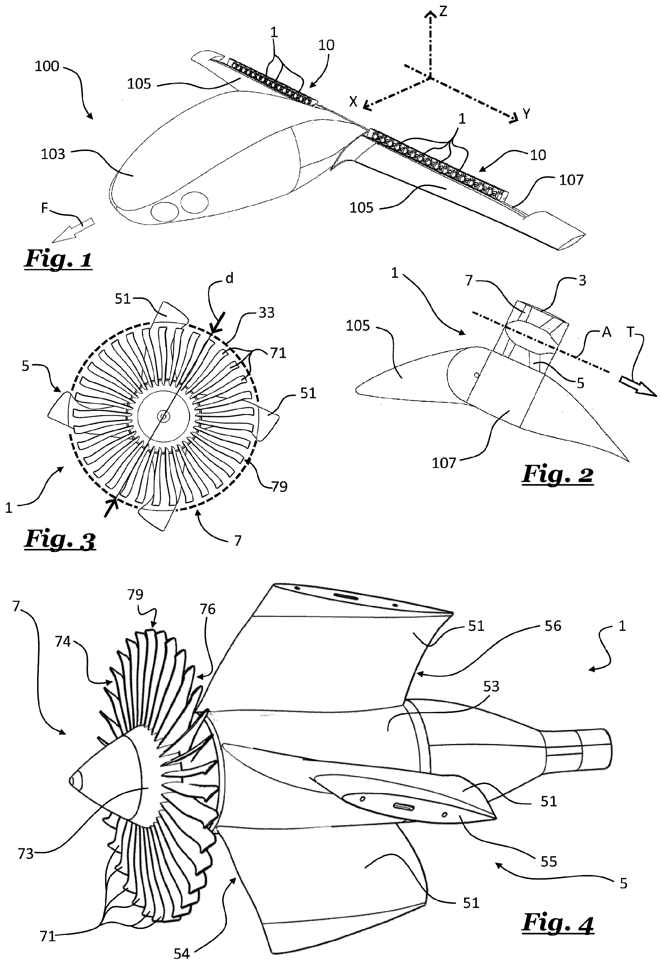

Fig. 1 shows the aircraft 100 having the array 10 arranged in a tilted position in relation to the fuselage 103. Fig. 1 shows the an aileron 107 including the ducted fan engine array 10 comprising a multitude of electrically powered ducted fan engines 1 arranged in a tilted intermediate pivoting position which may correspond to a state after take-off and before cruise flight or after cruise flight and before landing, which is shown in further detail in Fig. 2. It shall be clear that the engines 1 could be in a different position, such as a cruise flight position in which the axis A of the engines is arranged corresponding, in particular essentially parallel or parallel, to the longitudinal or roll axis X (not shown). In the a cruising position, the direction of thrust T of the engine 1 is aligned with the forward cruise flight direction F. The forward cruise flight direction F may correspond to the longitudinal axis or roll axis X of the aircraft 100. Alternatively, it shall be clear that the engines 1 could be arranged in yet another position, such as a vertical take-off and/or landing or hovering position in which the axis A of the engines is arranged corresponding, in particular essentially parallel or parallel, to the vertical or yaw axis Z (not shown). Fig. 2 shows the aileron 107 with an engine 1 in a tilted intermediate pivoting position which may correspond to a state after take-off and before cruise flight or after cruise flight and before landing. The multitude of electrically powered ducted fan engines 1 are arranged immediately adjacent one another in the direction of the pitch axis Y of the aircraft 100. In the exemplary embodiment of a passenger aircraft 100 including a cabin shown in figure 1, one pair of arrays 10 of multiple individual ducted fan engines is attached to the rear of the left and right wing 105. Alternatively, several pairs of arrays 10 could be attached to the wings 105, for example two, three or four pairs of arrays 10, wherein each array may be pivotable with regard to the fuselage 103 independent of the other. At least one pair of ducted fan engines or at least pair of arrays of ducted fan engines may alternatively or additionally be attached to the front of the aircraft 100, optionally as or in combination with a canard structure (not shown).

Figure 3 shows a schematic front view onto a ducted fan engine 1. The inner diameter d defined by an inner surface 33 of the shroud 3 of the ducted fan engine 1 is indicated as a dashed line surrounding the blades 71 of the rotor 7. Several vanes 51 of a stator 5 attaching the rotor 7 to the shroud 3 are visible behind the blades 71. The outer diameter of the rotor 7 defined by the distal ends 79 of the rotor blades 71 is almost as large as the inner diameter d of the shroud 3. In the exemplary embodiment of a ducted fan engine 1, the single rotor 7 includes 33 rotor blades, which may all be of the same design.

Figure 4 shows a schematic perspective view of the stator 5 and rotor 7 of the ducted fan engine 1. The shroud 3 is not shown in figure 4 so that the other components are clearly visible. The stator 5 shown in the exemplary embodiment comprises 4 large stator vanes 51 which may alternatively be called guiding vanes or stator blades. The stator vanes 51 extend in a generally radial direction R from a stator housing 53 towards the shroud 3. The stator housing 53 may be of generally cylindrical design and contain at least one electromotor and/or transmission for driving the rotor 7 therein. The guide vanes 51 may all be of the same design. The guide vanes 51 each define a respective airfoil 55. The airfoil 55 of each guide vane 51 maybe essentially constant along the radial extension of the vane 51. The guide vane 51 may have a leading edge 54 and the trailing edge 56 both of which may be inclined with respect to the radial direction R at an angle between 20° and 45°, in particular approximately 30°, so as to minimize interaction noise. The stator vanes 51 attach the stator housing 53 and the rotor 7 rotatably mounted thereto to the shroud 3. The stator vanes 51 define an airfoil 55 with a continuous inclination γ of for example approximately 15° with regard to the rotary axis A.

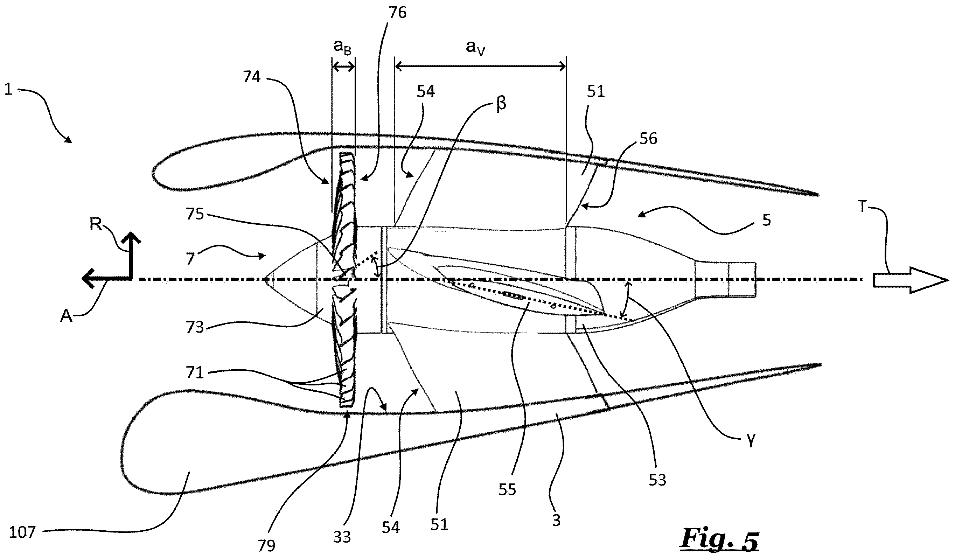

Figure 5 shows a schematic sectional side view of a ducted fan engine 1 with a shroud 3 integrally formed with an aileron 107. The ducted fan engine 1 defines a rotary axis A in regard to which the shroud 3, stator 5, and rotor 7 are arranged coaxially. With regard to an airflow streaming through the engine 1 for propelling the aircraft, the rotor 7 is arranged upstream of the stator 5. The shroud 3 defines a approximately cylindrical cross-section for the airflow. The diameter d of the shroud 3, in particular in the area of the rotor 7, may be less than 500 mm, in particular between 250 and 350 mm, for example 300 mm.

The rotor blades 71 define an airfoil 75 with an inclination β with regard to the rotary axis A increasing from the rotor hub 73 towards the respective radially outward distal end 79 of the rotor blade. In the proximity of the rotor hub 73, the inclination β may be at a minimum and close to 0°. At the distal end 79, the inclination β may reach a maximum of for example approximately 40°. The inclination γ of the stator vanes 51 is oriented opposite to the inclination β of the rotor blades 51 such that swirl introduced into the airflow by the rotor 7 is reduced through the stator 5.

The leading edge 74 of the blade 71 may have a concave shape with regard to the axial direction A. The trailing edge 76 of the blade 71 may be essentially rectilinear. The blade 71 may be curved in the forward direction at the distal end 79. The rotor blades 71 are arranged equidistantly around the circumference of the rotor hub 73 and attached thereto such that the rotor hub 73 and the rotor blades 71 rotate together to accelerate the airflow through the ducted fan engine 1 so as to propel the aircraft. It may be preferred that the trailing edge 76 of the blade 71 and the leading edge 54 of the stator vane 51 are oriented and/or shaped different from one another.

The axial vane length av measured along the stator housing 53 is substantially larger than the axial blade length a_{B} measured at the rotor hub 73. As shown in figure 5, axial vane length av may be approximately five to six times as large as the axial blade length a_{B}.

### Experiments

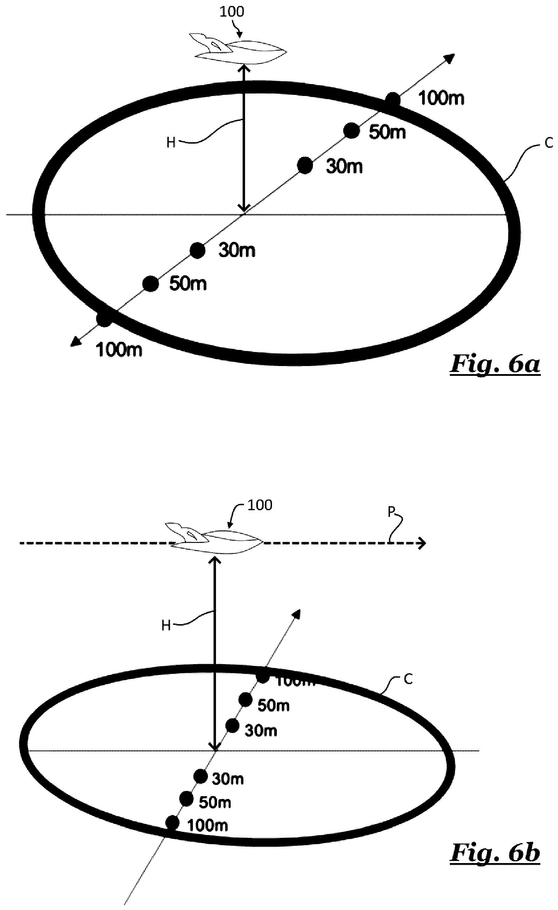

Figure 6a shows an experimental setup for measuring noise emissions (dBA) for an aircraft 100 as described with regard to Fig. 1. In a first experiment, the aircraft 100 is operated in a hover state at an altitude H of approximately at least 4m above a level ground. Sound emissions may be detected at one or more spots from the ground. With a microphone positioned in different spots along a circle C having a radius of 100 m centered around the aircraft 100, sound emissions between approximately 62 dBA and 68 dBA were detected. Farfield noise measured at in a distance of 100 m from the aircraft was found to be between 58 dBA and 64 dBA.

In a second experiment with the experimental setup as shown in Figure 6a as described above, the aircraft 100 is operated in an approach / transition state. Noise is measured in a horizontal distance of 100 m from the aircraft. Sound emissions were found to be between 64 dBA and 68 dBA.

Figure 6b shows a different experimental setup for measuring noise emissions (dBA) for an aircraft 100 as described with regard to Fig. 1. In a third experiment, the aircraft 100 is operated in a cruise flight state at an altitude H of approximately at least 20m above a level ground, flying along a path P crossing the 200m diameter measurement circle C diametrically. Noise is measured at in a horizontal distance of 100 m from the aircraft. Sound emissions were found to be less than 62 dBA at a lateral distance of 100m.

Table 1 below shows engine noise levels for different engine configurations for a ducted fan engine 1 such as described above with respect to Figs. 2-4, comprising different pairings of of rotor blades and stator vanes numbers.

**Table 1: noise level (dBA) for different 300 mm shroud diameter engine configurations with equal operating thrust levels at corresponding RPM measured in an echoic free field environment at 1m and 90° from engine axis.**

| sound emission in dBA | | blades | | |
|---|---|---|---|---|
| | | 12 | 19 | 33 |
| vanes | 4 | 99 | 97 | 93 |
| | 6 | 100 | 99 | 95 |
| | 23 | 101 | 100 | 98 |

The features disclosed in the above description, in the figures and in the claims can be of importance both individually and in any combination for the realization of the invention in its various configurations.

### Reference numbers

- 1: ducted fan engine
- 3: shroud
- 5: stator
- 7: rotor
- 10: array
- 33: inner surface
- 51: stator vane
- 53: stator housing
- 54: leading edge
- 55: vane aerofoil
- 56: trailing edge
- 71: rotor blade
- 73: rotor hub
- 74: leading edge
- 75: blade aerofoil
- 76: rear edge
- 79: distal end
- 100: aircraft
- 103: fuselage
- 105: wing
- 107: aileron

- a_{B}: axial blade length
- a_{V}: axial vane length
- d: diameter
- A: rotary axis
- C: circle
- F: cruise flight direction
- H: altitude
- P: path
- T: thrust direction
- X: roll axis; longitudinal axis
- Y: pitch axis; lateral axis
- Z: yaw axis; vertical axis

- β: blade inclination
- γ: vane inclination

## Claims

1. Ducted fan engine (1) configured for providing thrust for an aircraft (100), in particular an aircraft (100) having vertical takeoff and landing capability, comprising:
a shroud (3) having a substantially circular cross section;
a stator (5) having one or more substantially radially extending stator vanes; and
a rotor (7) rotatably supported by the shroud; **characterized in that** the rotor (7) comprises at least 19 rotor blades (71), in particular at least 25 rotor blades (71).

2. Ducted fan engine (1) according to claim 1, **characterized in that** the rotor comprises at least 28 rotor blades (71), in particular at least 30 rotor blades, and/or no more than 38 rotor blades, in particular no more than 35 rotor blades (71).

3. Ducted fan engine (1) according to claim 1 or 2, wherein the rotor (7) includes a hub (73) coaxial with regard to a rotary axis (A) of the ducted fan engine (1), wherein the rotor blades (71) extend radially outward from the hub (73), **characterized in that** the aerofoil (75) of the rotor blades extends approximately parallel to the rotary axis (A) in the proximity of the rotor hub (73) and/or **in that** the aerofoil (75) of the rotor blades (71) extends at an inclination (β) of approximately at least 20°, in particular at least 35°, and/or no more than 60°, in particular no more than 45°, with respect to the rotary axis (A) at an end (79) of the rotor blades (71) distal with regard to the rotor hub (73).

4. Ducted fan engine (1) according to one of the preceding claims, **characterized in that** the rotor blades (71) have a rear edge (76) extending essentially straight in the radial direction, in particular perpendicular to the rotary axis (A), and/or **in that** the rotor blades have a concave leading edge (74).

5. Ducted fan engine according to one of the preceding claims, **characterized in that** the stator (5) comprises no more than 12 stator vanes (51), in particular no more than 8 stator vanes, more particularly no more than 8 stator vanes, and/or at least 2 stator vanes, in particular 4 stator vanes (51).

6. Ducted fan engine (1) according to one of the preceding claims, **characterized in that** the at least one stator vane (7) extends radially between the inner surface (33) of the shroud (3) and the outer surface of a stator housing (53), wherein the aerofoil (55) of the at least one stator vanes (51) is essentially constant in the radial direction (R), and/or wherein the aerofoil (55) of the at least one stator vane (51) extends at an inclination (γ) of approximately at least -5°, in particular at least -10°, and/or no more than -30°, in particular no more than -20°, with respect to the rotary axis (A).

7. Ducted fan engine (1) according to one of the preceding claims, wherein the ratio of stator vanes (51) to rotor blades (71) is at least 1/20, in particular at least 1/10, and/or no more than 1/2, in particular no more than 2/7, in particular no more than 1/5, more particularly no more than 1/6, wherein most particularly, the ratio lies between 1/8 and 1/9.

8. Ducted fan engine (1) according to one of the preceding claims, **characterized in that** the axial length (av) of the at least one stator vane (51) is larger than the axial length (a_{B}) of the rotor blades (71), wherein in particular the at least one stator vane (51) is at least twice as long, in particular at least 4 times as long, more particularly at least 5 times, as long as the rotor blades (71), and/or no more than 10 times, in particular no more than 8 times, more particularly no more than 6 times as long as the rotor blades (71).

9. Ducted fan engine (1) according to one of the preceding claims, **characterized in that** the width (d), in particular inner diameter, of the shroud (3) is no larger than 500 mm, in particular in a range of 200 mm to 400 mm, more particularly in a range of 270 mm to 330 mm.

10. Ducted fan engine (1) according to one of the preceding claims, **characterized in that** the ducted fan engine (1) comprises at least one electromotor configured for driving the rotor (7).

11. Array (10) of several, in particular two, three or five, ducted fan engines (1) according to one of the preceding claims rigidly coupled to one another, in particular in an axis-parallel manner.

12. Aircraft (100), in particular passenger aircraft, having vertical takeoff and landing capability including a fuselage (103) and at least one ducted fan engine (1) according to one of the claims 1 to 10, in particular an array according to claim 11, pivotably connected to the fuselage (103) around a pitch axis (Y) of the aircraft (100).

13. Aircraft (100) according to claim 12 having a cruise flight state in which the at least one ducted fan engine (1) is oriented with its rotary axis (A) corresponding to a longitudinal axis (X) of the aircraft (100) at an altitude (H) of approximately 20 m and in which noise emission determined in a lateral distance of 100m lies below 65 dBA, in particular below 62 dBA, more particularly below 60 dBA, most particularly below 55 dBA.

14. Aircraft (100) according to claim 12 or 13 having an approach and/or transition state in which the at least one ducted fan engine is tilted with its rotary axis (A) oriented between the longitudinal axis (X) and the yaw axis (Z) of the aircraft (100) at an altitude (H) of approximately 4 m or more and in which noise emission determined in distance of 100m lies below 73 dBA, in particular below 70 dBA, more particularly below 68 dBA, most particularly below 65 dBA or below 60 dBA.

15. Aircraft (100) according to one of the claims 12 to 14 having a hovering state in which the at least one ducted fan engine is oriented with its rotary axis (A) corresponding to a yaw axis (Z) of the aircraft (100) at an altitude (H) of approximately 4 m in which noise emission determined in distance of 100m lies below 70 dBA, in particular below 68 dBA, more particularly below 65 dBA, most particularly below 63 dBA or below 60 dBA.

## Amended claims

### Amended claims in accordance with Rule 137(2) EPC.

1. Ducted fan engine (1) configured for providing thrust for an aircraft (100), in particular an aircraft (100) having vertical takeoff and landing capability, comprising:
a shroud (3) having a substantially circular cross section;
a stator (5) having one or more substantially radially extending stator vanes; and
a rotor (7) rotatably supported by the shroud; **characterized in that** the rotor (7) comprises at least 19 rotor blades (71) and no more than 38 rotor blades, in particular no more than 35 rotor blades (71); wherein the stator (5) comprises no more than 12 stator vanes (51), in particular no more than 8 stator vanes, more particularly no more than 6 stator vanes.

2. Ducted fan engine (1) according to claim 1, **characterized in that** the rotor comprises at least 28 rotor blades (71), in particular at least 30 rotor blades.

3. Ducted fan engine (1) according to claim 1 or 2, wherein the rotor (7) includes a hub (73) coaxial with regard to a rotary axis (A) of the ducted fan engine (1), wherein the rotor blades (71) extend radially outward from the hub (73), **characterized in that** the aerofoil (75) of the rotor blades extends approximately parallel to the rotary axis (A) in the proximity of the rotor hub (73) and/or **in that** the aerofoil (75) of the rotor blades (71) extends at an inclination (β) of approximately at least 20°, in particular at least 35°, and/or no more than 60°, in particular no more than 45°, with respect to the rotary axis (A) at an end (79) of the rotor blades (71) distal with regard to the rotor hub (73).

4. Ducted fan engine (1) according to one of the preceding claims, **characterized in that** the rotor blades (71) have a rear edge (76) extending essentially straight in the radial direction, in particular perpendicular to the rotary axis (A), and/or **in that** the rotor blades have a concave leading edge (74).

5. Ducted fan engine according to one of the preceding claims, **characterized in that** the stator (5) comprises at least 2 stator vanes.

6. Ducted fan engine (1) according to one of the preceding claims, **characterized in that** the at least one stator vane (7) extends radially between the inner surface (33) of the shroud (3) and the outer surface of a stator housing (53), wherein the aerofoil (55) of the at least one stator vanes (51) is essentially constant in the radial direction (R), and/or wherein the aerofoil (55) of the at least one stator vane (51) extends at an inclination (γ) of approximately at least -5°, in particular at least -10°, and/or no more than -30°, in particular no more than -20°, with respect to the rotary axis (A).

7. Ducted fan engine (1) according to one of the preceding claims, wherein the ratio of stator vanes (51) to rotor blades (71) is at least 1/20, in particular at least 1/10, and/or no more than 1/2, in particular no more than 2/7, in particular no more than 1/5, more particularly no more than 1/6, wherein most particularly, the ratio lies between 1/8 and 1/9.

8. Ducted fan engine (1) according to one of the preceding claims, **characterized in that** the axial length (av) of the at least one stator vane (51) is larger than the axial length (a_{B}) of the rotor blades (71), wherein in particular the at least one stator vane (51) is at least twice as long, in particular at least 4 times as long, more particularly at least 5 times, as long as the rotor blades (71), and/or no more than 10 times, in particular no more than 8 times, more particularly no more than 6 times as long as the rotor blades (71).

9. Ducted fan engine (1) according to one of the preceding claims, **characterized in that** the width (d), in particular inner diameter, of the shroud (3) is no larger than 500 mm, in particular in a range of 200 mm to 400 mm, more particularly in a range of 270 mm to 330 mm.

10. Ducted fan engine (1) according to one of the preceding claims, **characterized in that** the ducted fan engine (1) comprises at least one electromotor configured for driving the rotor (7).

11. Array (10) of several, in particular two, three or five, ducted fan engines (1) according to one of the preceding claims rigidly coupled to one another, in particular in an axis-parallel manner.

12. Aircraft (100), in particular passenger aircraft, having vertical takeoff and landing capability including a fuselage (103) and at least one ducted fan engine (1) according to one of the claims 1 to 10, in particular an array according to claim 11, pivotably connected to the fuselage (103) around a pitch axis (Y) of the aircraft (100).
